# EUROPÄISCHE PATENTSCHRIFT

(11) **EP 0 717 684 B1**
(45) Veröffentlichungstag und Bekanntmachung des Hinweises auf die Patenterteilung: **12.08.1998**
(21) Anmeldenummer: 94927593.7
(22) Anmeldetag: 07.09.1994
(51) Int. Cl.: B60J 7/043

(54) **VORRICHTUNG ZUR FÜHRUNG EINES FAHRZEUGSCHIEBEDACHDECKELS**
GUIDE MECHANISM FOR THE COVER PLATE OF A VEHICLE SUNROOF
DISPOSITIF PERMETTANT DE GUIDER UNE PLAQUE DE TOIT OUVRANT DE VEHICULE

(30) Priorität: 08.09.1993 DE 4330426
(43) Veröffentlichungstag der Anmeldung: 26.06.1996
(73) Patentinhaber: HS Products AG Systemtechnik und Produktmanagement, 82152 Krailling (DE)
(72) Erfinder: HAUSRATH, Udo, D-82319 Hadorf (DE)
(74) Vertreter: Nöth, Heinz, Dipl.-Phys.
(86) Internationale Anmeldenummer: EP9403016
(87) Internationale Veröffentlichungsnummer: WO9507192

(56) Entgegenhaltungen:
- EP-A- 0 282 583
- DE-A- 3 906 866
- DE-A- 3 910 894
- DE-C- 3 839 402
- PATENT ABSTRACTS OF JAPAN vol. 10, no. 77 (M-464) (2134) 26. März 1986 & JP,A,60 219 121 (NITSUSAN SHIYATAI K.K.) 11. Januar 1985

## Beschreibung

Die Erfindung betrifft eine Vorrichtung zur Führung eines Fahrzeugschiebedachdeckels im Bereich einer Dachöffnung eines Fahrzeugdaches mit den Merkmalen des Oberbegriffs des Anspruchs 1.

Aus der DE-C-38 39 402 ist eine derartige Vorrichtung zur Führung eines Fahrzeugschiebedachdeckels im Bereich einer Dachöffnung eines Fahrzeugdaches bekannt. Der Schiebedachdeckel ist an seinem Vorderrand mit einem Befestigungsgelenk schwenkbar gelagert, wobei das Befestigungsgelenk an einem festen Dachrahmenschenkel oder an einer verschiebbaren Konsole angebracht ist, die an einer Führungsbahn für einen Schieber oder Schlitten verschiebbar gelagert ist, welcher zum Öffnen und Schließen des Schiebedachs mittels eines Biegestabes dient.

Aufgabe der Erfindung ist es demgegenüber, für besondere Bauformen, insbesondere trapezförmige Schiebedachdeckel, deren Vorderkante länger ist als die Hinterkante, eine sichere Längsführung für den Schiebedachdeckel zu erreichen, wobei der problematische Eingriff der Deckelvorderkante an der Dachöffnung verbessert und das Bewegungsverhalten der Vorrichtung vereinfacht ist.

Diese Aufgabe wird erfindungsgemäß durch eine Vorrichtung mit den Merkmalen des Anspruchs 1 gelöst. Vorteilhafte Ausgestaltungen der Erfindung sind in den abhängigen Ansprüchen angegeben.

In bevorzugter Weise können eine oder zwei mechanische Einrichtungen zur Steuerung der Schiebedachdeckelbewegung am Träger vorgesehen sein. Auf diesen mittleren Träger kann ein an der Vorderkante gebildeter Drehpunkt bzw. gebildete Drehachse für eine Ausstellbewegung des Deckels in Längsrichtung des Trägers verfahrbar sein.

Die in der deutschen Patentschrift P 43 20 106.7 beschriebene Vorrichtung zur Steuerung der Bewegung eines Fahrzeugschiebedachdeckels kann als mechanische Einrichtung zur Bewegungssteuerung des Schiebedachdeckels dienen.

Anhand der Figuren wird die Erfindung noch näher erläutert. Es zeigt:
- Fig. 1:: eine Seitenansicht des geschlossenen Schiebedaches;
- Fig. 2:: eine Seitenansicht mit an der Hinterkante ausgestelltem Schiebedachdeckel in einer vorderen Position;
- Fig. 3:: eine Seitenansicht mit an der Hinterkante ausgestelltem Schiebedachdeckel in einer rückwärtigen Position;
- Fig. 4:: in perspektivischer Darstellung schräg von oben die in Figur 2 dargestellte Deckelstellung;
- Fig. 5:: in perspektivischer Darstellung die in Figur 3 dargestellte Schiebedachdeckelstellung;
- Figuren 6 bis 9:: verschiedene Betriebsstellungen der Steuerungsvorrichtung für die Deckelbewegung;
- Fig. 10:: einen Querschnitt durch eine Führungsbahn für die Schlittenbewegung;
- Fig. 11:: eine Gesamtdarstellung der Steuerungsvorrichtung, in welcher verschiedene Deckelstellungen und Stellungen, insbesondere die beiden Endstellungen, dargestellt sind; und
- Fig. 12:: eine Explosionsdarstellung der wesentlichen Bestandteile der Steuereinrichtung für die Deckelbewegung.

Insbesondere aus der Figur 5 ist ein mittlerer Träger 36 zu ersehen. Dieser mittlere Träger 36 erstreckt sich in Fahrzeuglängsrichtung in einer Dachöffnung 35, in deren Bereich der Schiebedachdeckel 8 ausstellbar und verschiebbar ist. Die beiden Längsränder 33 und 34 der Schiebedachöffnung 35 sind dem schrägen

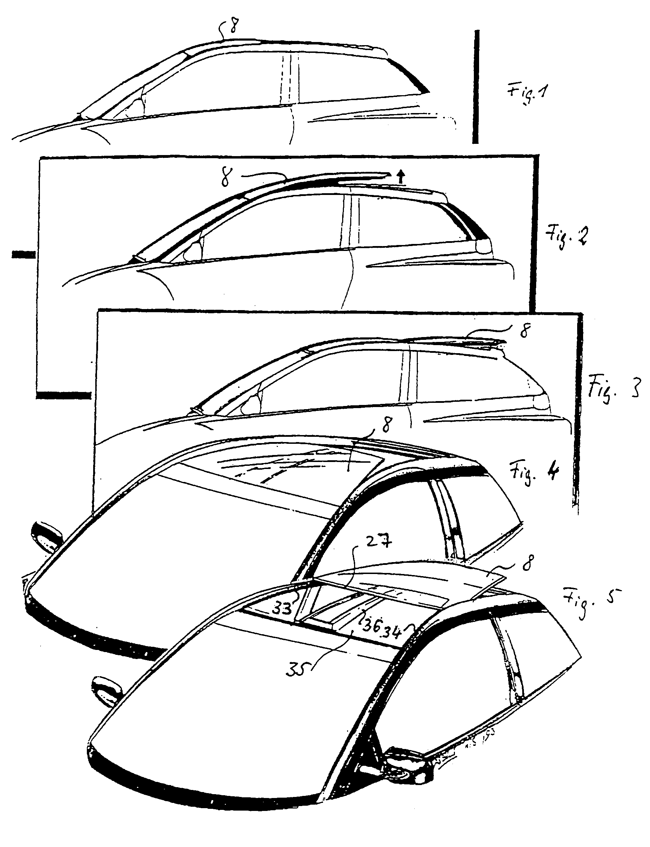

Verlauf der beiden Seitenkanten des trapezförmig ausgebildeten Schiebedachdeckels 8 angepaßt, so daß in geschlossener Stellung (Fig. 1) die Schiebedachöffnung 35 dicht verschlossen ist.

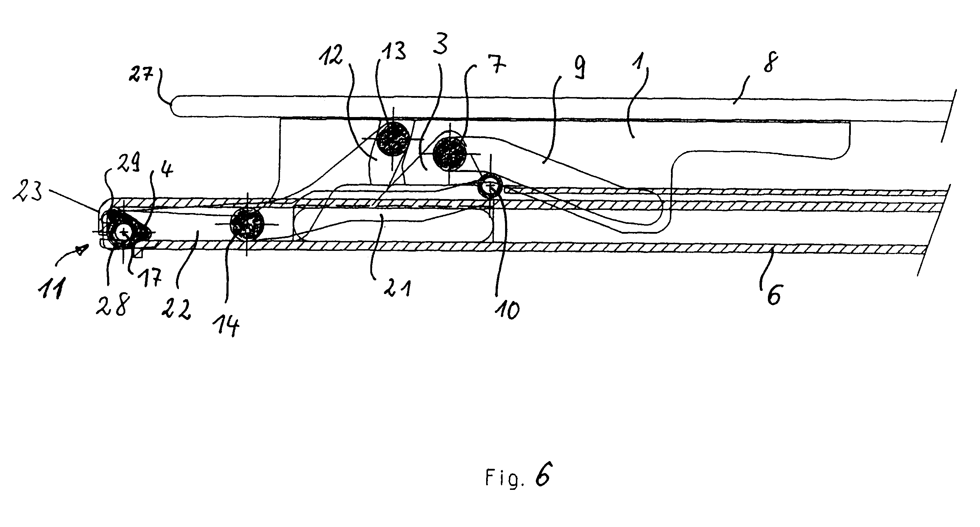

An der Deckelvorderkante 27 wird durch die in den Figuren 6 bis 12 dargestellte Steuerungseinrichtung ein Drehpunkt bzw. eine Drehachse für die Ausstellbewegung (Figuren 2 bis 5) des Schiebedachdeckels 8 am Träger 36 gebildet. Dieser Drehpunkt bzw. diese Drehachse ist am Träger 36 in Längsrichtung verschiebbar, wie das insbesondere aus der Darstellung der Figuren 3 und 5 zu ersehen ist. Auf diese Weise wird auch bei Sonderformen, insbesondere bei trapezförmigen Schiebedachdeckeln, eine sichere Führung des ausgestellten Schiebedachdeckels erreicht.

Anhand der Figuren 6 bis 12 wird die Einrichtung zur Steuerung der Bewegung des Schiebedachdeckels 8 noch naher erläutert.

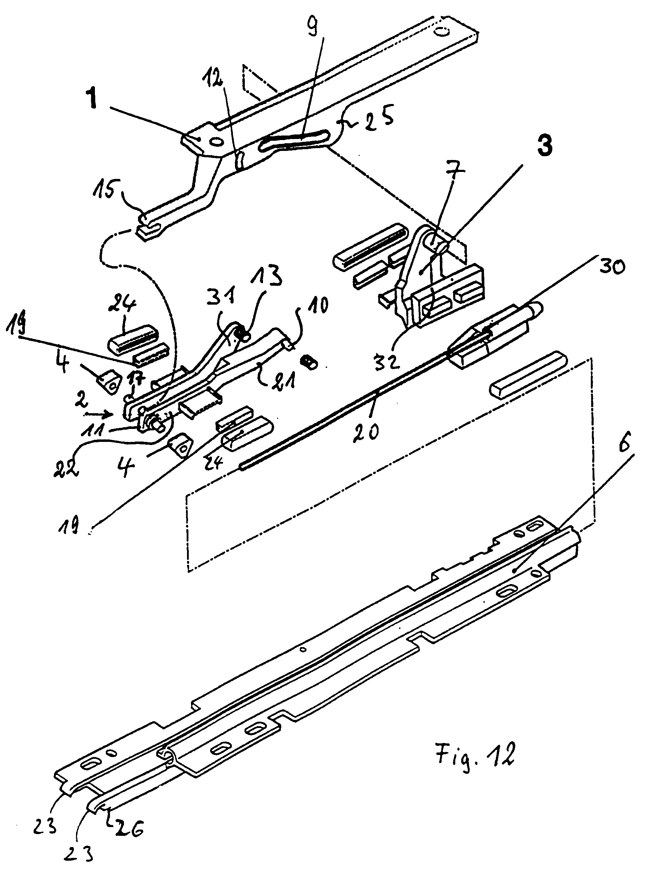

Wie insbesondere aus der Explosionsdarstellung des Ausführungsbeispiels in der Fig. 12 zu ersehen ist, besitzt die Vorrichtung zur Steuerung der Bewegung eines Fahrzeugschiebedachdeckels 8 (Fig. 6 - 9) einen Deckelhalter 1. Im Deckelhalter 1 ist eine Ausstellkulisse 9 vorgesehen, in welche ein Ausstellzapfen 7 an einem Schlitten (Transportschlitten) 3 ragt. Ferner ist am Deckelhalter 1 eine Steuerkulisse 12 vorgesehen. In diese ragt ein Steuerzapfen 13 eines in einer Längsführungsbahn 6 (Führungsschiene) geführten Schwenkhebels 2. Die Steuerkulisse erstreckt sich etwa senkrecht zur Längsrichtung und hat eine schwache Krümmung bzw. eine leichte Knickstelle. Zur Führung des Schwenkhebels 2 in der Führungsbahn 6 sind Gleitbacken 19 beidseitig auf den Schwenkhebel 2 aufgesteckt und können aus einem Gummigrundkörper bestehen. Auf die elastischen Gleitbacken 19 sind Gleitkappen 24 aus Kunststoff aufgesetzt. Die elastischen Gleitbacken bilden einen Lagerpunkt 14 (Gleitlagerpunkt) für den Schwenkhebel 2, welcher innerhalb der Längsführungsbahn 6 verschiebbar ist (Figuren 6 - 9).

Der Schwenkhebel 2 ist somit als zweiarmiger Hebel ausgebildet. Der erste Hebelarm 21 besitzt an seinem Ende ein Verriegelungsbetätigungselement in Form eines Verriegelungszapfens 10. Der zweite Hebelarm 22 besitzt an seinem vorderen Ende eine als Kippvorrichtung ausgebildete Hubeinrichtung in Form beidseitig angeordneter Kipphebel 4. Die Kipphebel sind einarmige Hebel und besitzen ein angeformtes Teil 28, welches abgerundet oder als Rolle 5 ausgebildet sein kann. Die Kipphebel wirken mit Führungsmitteln 23 in Form von gegenüber der horizontalen abgewinkelten vorderen Führungsflächen an der Führungsschiene 6 zusammen.

Die Ausstellkulisse 9 und die Steuerkulisse 12 sind in einem senkrecht nach unten ragenden Führungsteil 25 des eine waagerechte Befestigungsplatte aufweisenden Deckelhalters 1 vorgesehen. Die Ausstellkulisse 9 erstreckt sich mit ihrem wesentlichen Teil von vorne nach hinten schräg nach unten und bestimmt damit die Hubbewegung (Ausstellbewegung) des Deckels 8. Am vorderen Ende des Führungsteiles 25 ist eine Aufnahmegabel 15 vorgesehen, die das vordere Ende des Schwenkhebels 2 aufnimmt. Hierzu ist am vorderen Ende des Schwenkhebels 2 ein Lagerzapfen, welcher eine Aufnahmeachse 17 bildet, vorgesehen. An beidseitigen Verlängerungen des Lagerzapfens 5 sind auch die Kipphebel 4 schwenkbar gelagert.

Mit Hilfe einer Handkurbel oder eines elektromotorischen Antriebs kann der Schlitten 3 für die in der Führungsschiene 6 erfolgende Bewegung angetrieben werden. Der Antrieb wird über ein Antriebskabel 20 übertragen. Am Antriebskabel 20 befindet sich ein Gleitstück 30, das in den Transportschlitten 3 zur Bewegungsübertragung eingesetzt ist.

Am Schwenkhebel 2 ist ein weiteres Bewegungssteuerelement in Form des Steuerzapfens 13 vorgesehen. Dieser befindet sich an einem weiteren Hebelarm 31 an der Seite des ersten Hebelarmes 21. Der Steuerzapfen 13 ist in der Weise mit dem Schwenkhebel 2 verbunden, daß er in die Steuerkulisse 12 am Führungsteil 25 des Deckelhalters 1 eingreift. Sowohl am Verriegelungszapfen 10 als auch am Steuerzapfen 13 können reibungsvermindernde Rollen vorgesehen sein.

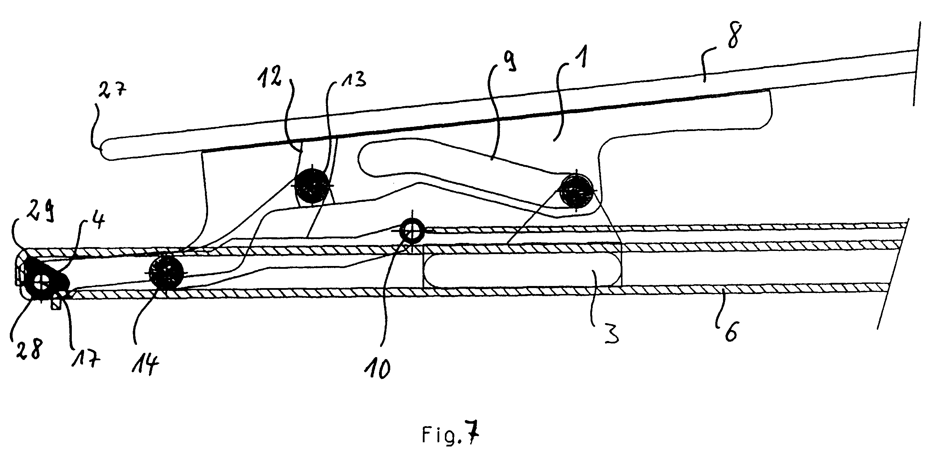

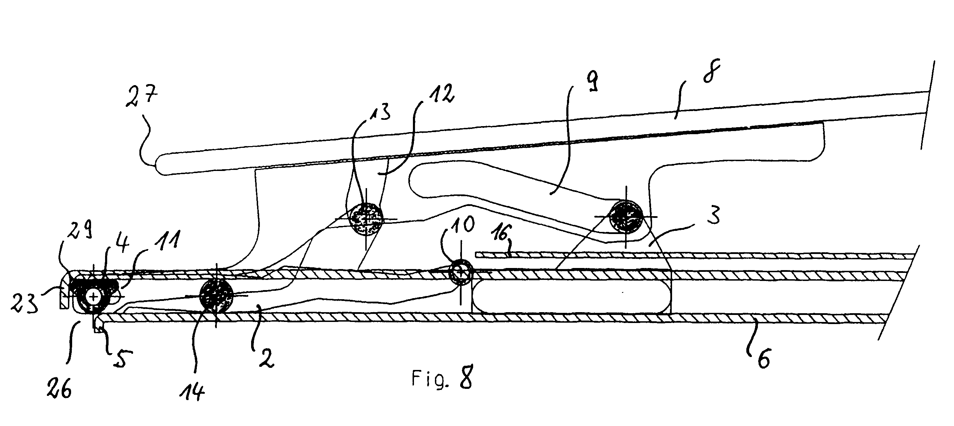

Beim Verschieben des Transportschlittens 3 in der Führungsschiene 6 ergibt sich ein kombinatorisches Zusammenwirken durch den Eingriff des Ausstellzapfens 7 in die Ausstellkulisse 9, durch den Eingriff des Steuerzapfens 13 in die Steuerkulisse 12, durch die Aufnahme des vorderen Hebelarmendes 11 in der Aufnahmegabel 15 am Führungsteil 25 und durch den Verriegelungszapfen10 in der Weise, daß in einer ersten zurückgezogenen Position bei ausgestelltem Deckel 8 (Fig. 7) die Mechanikteile zueinander verriegelt sind und bei einer weiteren Verschiebung des Schlittens (Fig. 8) durch den Schwenkhebel 2 die Deckelvorderkante 27 angehoben wird. Der Drehpunkt der Ausstellbewegung (Bewegung der Figur 6 nach Figur 7) wird dabei auf die Deckelvorderkante 27 verlegt.

Anhand der Figuren 6 bis 9 werden verschiedene Betriebsstellungen des Transportschlittens 3 und des damit gekoppelten Schwenkhebels 2 und der daran angeordneten Funktionselemente noch näher erläutert.

Durch die Betätigung der Handkurbel bzw. Elektroantriebs wird der Transportschlitten 3, der in der Führungsschiene 6 gleitet, über das Antriebskabel 20 bewegt. Der Transportschlitten 3 greift über den Ausstellzapfen 7 in die Ausstellkulisse 9 des Deckelhalters ein. Über diese Ausstellkulisse 9 wird durch die Längsbewegung des Transportschlittens 3 der Deckelhalter 1 und der Deckel 8 hinten angehoben (Fig. 7).

Der Drehpunkt dieser Hubbewegung des Deckels 8 liegt an der Deckelvorderkante 27 und wird mit Hilfe der Steuerkulisse 12 und der Aufnahmegabel15 im Deckelhalter erzeugt. Der Steuerzapfen 13 bewegt sich dabei in der Steuerkulisse 12 aus einer oberen Position (Fig. 6) in eine mittlere Position (7), in welcher die Steuerkulisse eine leichte Biegung aufweist. Hierdurch wird eine definierte Drehachse an der Deckelvorderkante 27 bei der Winkelbewegung während des Ausstellens (Hubbewegung) des Deckels erreicht.

Während der Hubbewegung wird der Verriegelungszapfen 10 über eine Führungsbahn 32 auf dem Transportschlitten 3 in der Verriegelungsposition gehalten. In dieser Position drückt der Verriegelungszapfen 10 um den Drehpunkt 14 des Gleitbackenlagers des Schwenkhebels 2 den Kipphebel 4 mit seinem Kipphebelteil 28 in eine Aussparung 26 am vorderen Ende der Führungsschiene 6. Dadurch wird verhindert, daß während der Hubbewegung der Deckel 8 am Transportschlitten 3 in Längsrichtung mitgezogen wird. Dies wird dadurch erreicht, daß der Schwenkhebel 2 und der damit verbundene Deckelhalter an ihrem vorderen Ende durch den Kipphebel 4 festgehalten werden. Hierdurch erreicht man durch selbsttätige Verriegelung die Sperre gegen die Längsbewegung des Deckels 8 beim Ausstellen.

Nach Beendigung dieser Ausstellbewegung fährt der Ausstellzapfen 7 in der Ausstellkulisse 9 gegen den hinteren Anschlag (Fig. 7), und der Steuerzapfen 13 befindet sich an der Knickstelle in der Steuerkulisse 12. Der Deckel 8 kann diese ausgestellte Position beibehalten.

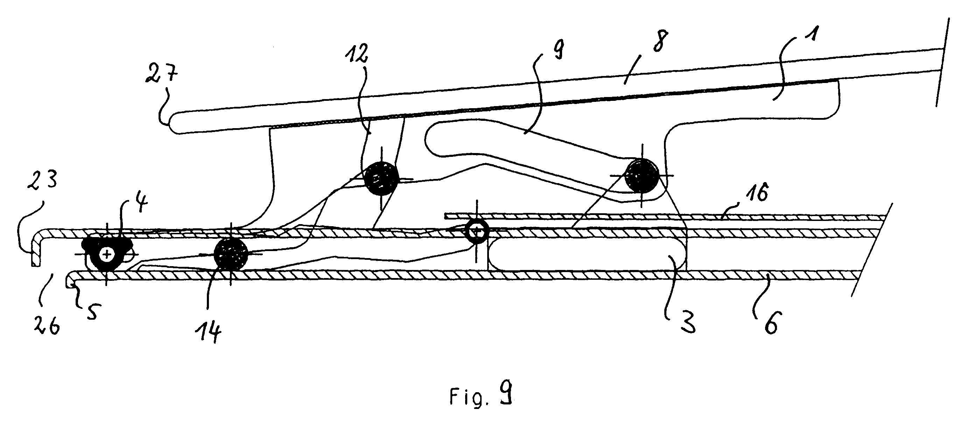

Bei einer weiteren Längsbewegung zieht der Transportschlitten 3 über den Deckelhalter 1 und den in der Steuerkulisse 12 in die unterste Position gebrachten Steuerzapfen 13 den Schwenkhebel 2 in Längsrichtung mit. Der Schwenkhebel 2 kippt zu Beginn der Deckellängsbewegung zusätzlich um den Lagerpunkt 14 mit dem Verriegelungszapfen 10 nach unten und mit dem in der Aufnahmeachse 17 liegenden Kipphebellagerpunkt am Hebelende 11 nach oben. Der Verriegelungszapfen 10 taucht hinter dem Ende der Führungsbahn 32 des Transportschlittens 3 nach unten ein und wird unter einen Führungssteg 16 (Fig. 8, 9) in der Führungsschiene 6 hineingezogen. In dieser Position ist der Transportschlitten 3 mit dem Schwenkhebel 2 über den Deckelhalter 1 verspannt.

Diese erste Längs- und Kippbewegung des Schwenkhebels 2 wird durch den Kipphebel 4 und den z.B. als Kipphebelrolle ausgebildeten oder einstückig angeformten Kipphebelteil 28 erzeugt, die in der Aufnahmeachse 17 des Schwenkhebels drehgelagert sind. Der Kipphebel 4 wirkt dabei mit schräg oder rechtwinkelig abgebogenen Führungsmitteln am vorderen Ende der Führungsschiene 6 zusammen. Die Führungsmittel werden beim dargestellten Ausführungsbeispiel durch ein rechtwinklig abgewinkeltes Teil 23 des oberen waagerecht verlaufenden Schienenteils der Führungsschiene 6 und ein unteres rechtwinklig abgebogenes Schienenteil 5 gebildet. Zwischen den beiden Schienenteilen am Anfang der Führungsschiene 6 wird die Ausnehmung 26 gebildet. In der Ecke zwischen dem oberen waagerecht verlaufenden Schienenteil der Führungsschiene 6 und dem abgewinkelten Schienenteil 23 wird ein Lagerpunkt für den Kipphebel 4 gebildet, welcher einen Drehpunkt 29 für die Schwenkbewegung bzw. Kippbewegung des Kipphebels 4 bei der Bewegung aus der Stellung in den Figuren 6 und 7 in die Stellung der Figur 8 bildet. Bei dieser Bewegung wird der in den Figuren 6 und 7 in der Ausnehmung 26 liegende Kipphebelteil 28 aus der Ausnehmung 26 gehoben. Der Drehpunkt 29 liegt oberhalb des Drehpunktes bzw. Lagerpunktes 14 für den zweiarmigen Schwenkhebel 2. Die rechtwinklig abgebogenen vorderen Führungsschienenenden 5 und 23 können beide oder jeweils einzeln auch einen schrägen Verlauf zur Begrenzung der Ausnehmung 26 haben. Bei der Bewegung des Kipphebels 4 aus der in den Figuren 6 und 7 dargestellten Stellung in die in der Figur 8 dargestellte Stellung wird das vordere Hebelarmende 11 des zweiarmigen Schwenkhebels 2 angehoben. Hierdurch wird auch die Voderkante 27 des Deckels 8 angehoben bei gleichzeitiger Absenkung des rückwärtigen Teils des Deckels 8. Hierdurch erreicht man beim Öffnen ein Herausheben der Deckelvorderkante 27 aus der Abdichtung und beim Schließen ein Absenken der Deckelvorderkante 27 in die Abdichtung.

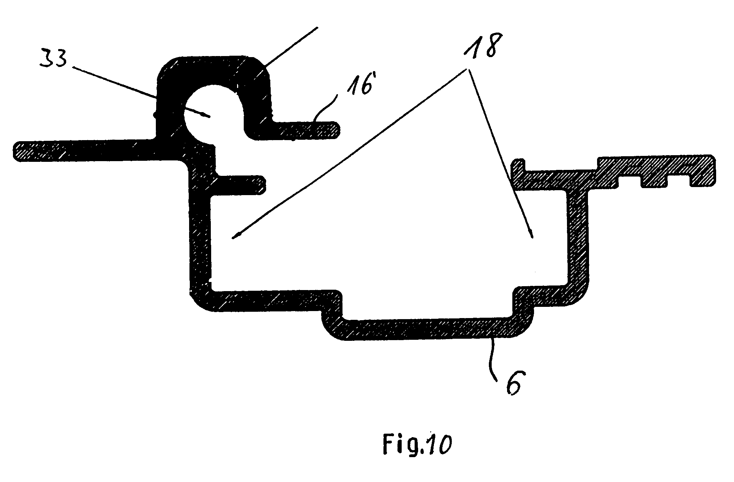

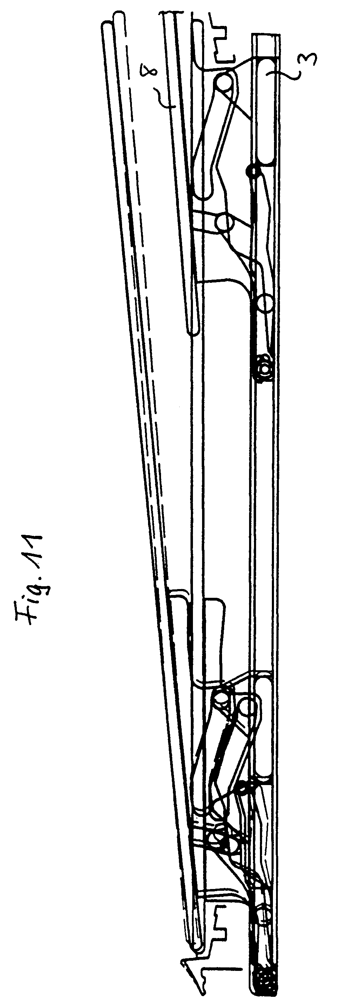

Bei der weiteren Längsverschiebung des Schlittens 3 in die in Richtung zu der in Fig. 11 dargestellten Endposition bewegen sich der Transportschlitten 3, die Gleitkappen 24, welche zusammen mit den Gleitbacken 19 den Lagerpunkt 14 des Schwenkhebels 2 bilden, und der Kipphebel 4 in Führungsbahnen 18 (Fig. 10) der Führungsschiene 6. Das Antriebskabel 20 verläuft in einem Führungskanal 33. Der Verriegelungszapfen 10 gleitet entlang dem Führungssteg 16.

Der Kipphebel 4 steht in der Schiene 6 oben auf Anschlag und legt sich an die waagerechte Fläche der Schiene 6 an. Dadurch gleitet der Kipphebel 4 mit dem Kipphebelteil 28 widerstandsfrei in die Führungsschiene 6 bis in die in Fig. 11 gezeigte hintere Endposition, in welcher der Deckel 8 aus der Dachöffnung entfernt ist.

Der Kipphebel 4 hat somit Funktionen bei der Bestimmung des Deckeldrehpunktes an der Deckelvorderkante 27, des Anhebens und Absenkens des Deckels 8 und der Bildung der Sperre gegen die Mitbewegung des Deckels 8 beim Ausstellen.

Beim Anheben der Vorderkante 27 des Deckels senkt sich die hintere Kante des Deckels 8 etwas ab, so daß der Deckel bei seiner Längsverschiebung gegenüber der Dachfläche des Kraftfahrzeugs einen sehr flachen Anstiegswinkel hat bzw. praktisch parallel zur Dachoberfläche verläuft (Fig. 3).

## Patentansprüche

1. Vorrichtung zur Führung eines Fahrzeugschiebedachdeckels (8) im Bereich einer Dachöffnung (35) eines Fahrzeugdaches
mit einer mechanischen Einrichtung zur Steuerung einer Schiebe- und Schwenkbewegung des Schiebedachdeckels (8), die zwischen den beiden seitlichen Rändern (33, 34) der Dachöffnung (35) an einem sich in Fahrzeuglängsrichtung in der Mitte der Dachöffnung (35) erstreckenden Träger (36) gelagert ist und einen Drehpunkt (eine Drehachse) für die Schwenkbewegung (Ausstellbewegung) des Schiebedachdeckels (8) an der Deckelvorderkante (27) des Schiebedachdeckels (8) bildet, wobei ein Schlitten (3) an einer Führungsbahn (6) des Trägers (36) längs verschiebbar ist, der die Schwenkbewegung (Ausstellbewegung) des Schiebedachdeckels (8) steuert,
**daduch gekennzeichnet,**
daß durch eine weitere Verschiebung des Schlittens (3) eine Hubeinrichtung (4, 5) betätigbar ist, durch die ein Anheben der Deckelvorderkante (27) steuerbar ist.

2. Vorrichtung nach Anspruch 1, dadurch gekennzeichnet, daß der Drehpunkt (die Drehachse) mittels der mechanischen Einrichtung entlang dem Träger (36) verfahrbar ist.

3. Vorrichtung nach Anspruch 1 oder 2, dadurch gekennzeichnet, daß zwei mechanische Einrichtungen zur Steuerung der Bewegung des Schiebedachdeckels (8) am Träger (36) vorgesehen sind.

4. Vorrichtung nach einem der Ansprüche 1 bis 3, dadurch gekennzeichnet, daß am Schlitten (3) ein Ausstellzapfen (7) vorgesehen ist, der in eine mit dem Deckel (8) verbundene Ausstellkulisse (9) eingreift und bei seiner Verschiebung in der Ausstellkulisse (9) den Deckel (8) in einer Schwenkbewegung (Ausstellbewegung) gegenüber der Fahrzeuglängsrichtung verstellt.

5. Vorrichtung nach einem der Ansprüche 1 bis 4, dadurch gekennzeichnet, daß der Deckel (8) während seiner Schwenkbewegung gegen eine Längsbewegung parallel zur Fahrzeuglängsachse gesperrt ist.

6. Vorrichtung nach einem der Ansprüche 1 bis 5, dadurch gekennzeichnet, daß mit dem Anheben oder Absenken der Deckelvorderkante (27) eine Hinterkante des Deckels (8) gegenläufig absenkbar bzw. anhebbar ist.

## Claims

1. An arrangement for guiding a vehicle sliding roof (8) in the region of a roof opening (35) of a vehicle roof, comprising a mechanical device for controlling a sliding and pivoting movement of the sliding roof (8), which is mounted between the two lateral edges (33, 34) of the roof opening (35) at a carrier (36) extending in the longitudinal direction of the vehicle in the centre of the roof opening (35), and forms a pivot point (a pivot axis) for the pivoting movement (outward movement) of the sliding roof (8) at the roof front edge (27) of the sliding roof (8), wherein a slider (3) is longitudinally displaceable on a guide track (6) of the carrier (36), for controlling the pivoting movement (outward movement) of the sliding roof (8),
characterised in that
a lifting device (4, 5) is actuable by further displacement of the slider (3), a lifting movement of the roof front edge (27) being controllable by the lifting device.

2. An arrangement according to claim 1 characterised in that the pivot point (the pivot axis) is displaceable along the carrier (36) by means of the mechanical device.

3. An arrangement according to claim 1 or claim 2 characterised in that there are provided two mechanical devices for controlling the movement of the sliding roof (8) on the carrier (36).

4. An arrangement according to one of claims 1 to 3 characterised in that provided on the slider (3) is an outward displacement projection (7) which engages into an outward displacement slide (9) connected to the roof (8) and upon displacement thereof in the outward displacement slide (9) displaces the roof (8) in a pivoting movement (outward movement) relative to the longitudinal direction of the vehicle.

5. An arrangement according to one of claims 1 to 4 characterised in that during its pivoting movement the roof (8) is locked to prevent a longitudinal movement parallel to the longitudinal axis of the vehicle.

6. An arrangement according to one of claims 1 to 5 characterised in that a rear edge of the roof (8) can be lowered and raised respectively in opposite relationship with the raising movement or lowering movement of the roof front edge (27).

## Revendications

1. Dispositif permettant de guider une plaque de toit ouvrant de véhicule (8) dans la zone d'une ouverture (35) d'un toit de véhicule, comprenant un dispositif mécanique pour commander un mouvement coulissant et pivotant de la plaque de toit ouvrant (8), qui est monté sur un support (36) s'étendant dans le sens longitudinal du véhicule, au centre de l'ouverture du toit (35), entre les deux bords latéraux (33, 34) de l'ouverture de toit (35), et qui forme un centre de rotation (un axe de rotation) pour le mouvement de pivotement (mouvement d'ouverture) de la plaque de toit ouvrant (8) sur le bord avant (27) de la plaque de toit ouvrant (8), un chariot (3), qui commande le mouvement de pivotement (mouvement d'ouverture) de la plaque de toit ouvrant (8), pouvant se déplacer dans le sens longitudinal sur une glissière (6) du support (36), caractérisé en ce qu'un dispositif de levage (4, 5), qui permet de commander un soulèvement du bord avant (27) de la plaque, peut être actionné par un déplacement ultérieur du chariot (3).

2. Dispositif suivant la revendication 1, caractérisé en ce que le centre de rotation (l'axe de rotation) peut être déplacé le long du support (36) au moyen du dispositif mécanique.

3. Dispositif suivant l'une des revendications 1 et 2, caractérisé en ce que deux dispositifs mécaniques sont prévus pour la commande du mouvement de la plaque de toit ouvrant (8) sur le support (36).

4. Dispositif suivant l'une des revendications 1 à 3, caractérisé en ce qu'un pivot de levage (7) est prévu sur le chariot (3), ce pivot s'engageant dans une coulisse de levage (9) assemblée avec la plaque (8), et animant la plaque (8), lors de son déplacement dans la coulisse de levage (9), d'un mouvement de pivotement (mouvement d'ouverture) par rapport au sens longitudinal du véhicule.

5. Dispositif suivant l'une des revendications 1 à 4, caractérisé en ce que la plaque (8) est bloquée, pendant son mouvement de pivotement, contre un mouvement longitudinal parallèle à l'axe longitudinal du véhicule.

6. Dispositif suivant l'une des revendications 1 à 5, caractérisé en ce qu'un bord arrière de la plaque (8) peut être abaissé et/ou soulevé en sens contraire, avec le soulèvement ou l'abaissement du bord avant (27) de la plaque.
